# EUROPÄISCHE PATENTSCHRIFT

(11) **EP 1 024 303 B1**
(45) Veröffentlichungstag und Bekanntmachung des Hinweises auf die Patenterteilung: **27.04.2005**
(21) Anmeldenummer: 99811149.6
(22) Anmeldetag: 13.12.1999
(51) Int. Cl.: F16B 37/08

(54) **Befestigungselement für Gewindebolzen**
Fixing element for threaded stud
Elément de fixation pour tige filetée

(30) Priorität: 28.01.1999 DE 19904293
(43) Veröffentlichungstag der Anmeldung: 02.08.2000
(73) Patentinhaber: HILTI Aktiengesellschaft, 9494 Schaan (LI)
(72) Erfinder: Hermann, Fritz, 86899 Landsberg (DE)
(74) Vertreter: Wildi, Roland

(56) Entgegenhaltungen:
- DE-A- 3 817 073
- FR-A- 2 677 730

## Beschreibung

Die Erfindung betrifft ein Befestigungselement für Gewindebolzen gemäss dem Oberbegriff des Patentanspruchs 1.

Zur Festlegung von Bauteilen an einer Oberfläche, zur Verbindung von Bauteilen u.v.a.m. kommen Schrauben oder Gewindestangen zum Einsatz, die durch Bohrungen in die Bauteile gesteckt werden oder beispielsweise von einem Bauteil oder dem Untergrund abragen. Zur Festlegung eines weiteren Bauteils an der Gewindestange werden Befestigungselemente, beispielsweise Gewindemuttern, eingesetzt, die mit einer Innengewindebohrung versehen sind und auf die Gewindestange aufgeschraubt werden. Das Aufbringen von Gewindemuttem auf längere Gewindestangen kann je nach Länge der Stangen mit einem erheblichen Zeitaufwand verbunden sein. Ausserdem kommt es vielfach vor, dass das Gewinde am Ende solcher Gewindestangen beschädigt ist, so dass sich eine Gewindemutter ohne Nachbearbeitung des Gewindes nicht aufdrehen lässt.

Für solche Zwecke und für Anwendungen, bei denen das Gewinde nicht bis zum Ende der Gewindestange geführt ist oder das Ende der Gewindestange mit einem Bund versehen ist, sind mehrteilige Gewindemuttern bekannt, welche radial aufsetzbar und unter radialem Zusammenfügen der einzelnen Teile fixierbar sind. Eine derartige, mehrteilige Gewindemutter ist beispielsweise aus der DE-A-26 28 508 bekannt und besteht aus zwei im wesentlichen U-förmigen Scheiben, die an ihren einen, aufeinander liegenden Schenkeln mit einem Gelenkbolzen gelenkig miteinander verbunden sind. Die U-förmigen Ausnehmungen der Scheiben weisen am Grund mehrere Gewindegänge auf. Durch Zusammenschwenken der beiden U-förmigen Scheiben sind die der gelenkigen Verbindung gegenüberliegenden Schenkel zur Überlappung bringbar. Rastmittel an den einander zugekehrten Flachseiten der überlappenden Schenkel sorgen für den Zusammenhalt der Scheiben und für die erforderliche Vorspannung der Gewindemutter. Während derartige bekannte, mehrteilige Gewindemuttern eine einfache Schnellmontage an der gewünschten Position entlang der Längserstreckung einer Gewindestange ermöglichen und im zusammengeschwenkten und verrasteten Zustand ausreichende Halteeigenschaften aufweisen, ist ihre Montage an der Gewindestange immer noch relativ umständlich. Ausserdem sind sie in der Herstellung und im Zusammenbau relativ aufwendig und teuer.

Aus der gattungsbildenden DE-A-34 23 106 ist eine Halterung beschrieben, die an stangenförmigen Bauteilen, beispielsweise an Blitzschutzleitern befestigbar ist. Die Halterung besteht aus einem U-förmigen Winkelstück mit einem Basisteil und zwei davon senkrecht abragenden Schenkeln. Die Schenkel weisen jeweils eine hakenmaulartige Aussparung auf. Die Aussparungen münden bei den Längsrändern der beiden Schenkel. Dabei sind die Mündungen einander entgegengerichtet. Vom Basisteil ragt ein Gewindezapfen ab, der dem Anschluss weiterer Bauteile dient. Das U-förmige Winkelstück wird vom Basisteil her von einem federbelasteten Bügel umgriffen. Der Bügel weist ein Querteil und zwei senkrecht davon abragende Seitenabschnitte auf. Das Querteil verläuft parallel zum Basisteil, die Seitenabschnitte parallel zu den Schenkeln des Winkelstücks. An den Stirnenden der Seitenabschnitte ist jeweils eine teilkreisförmige Ausnehmung vorgesehen. Der Bügel ist durch die Federkraft gegen das Winkelstück vorgespannt. Die Stirnenden der Seitenabschnitte überdecken die Aussparungen in den Schenkeln des Winkelstücks teilweise. Zur Montage wird die Halterung mit der Öffnung seitlich an das stangenförmige Bauteil angesetzt. Durch weiteres Andrücken wird der Bügel gegen die Federkraft gegenüber dem Basisteil des Winkelstücks zurückgeschoben. Danach kann die Halterung um 90° verdreht werden, wobei das stangenartige Bauteil in die freigegebenen hakenmaulartigen Aussparungen gleitet. Die Festlegung der Halterung erfolgt durch Klemmung, indem die Federkraft den Bügel gegen das Winkelstück presst. Dadurch werden die Stirnenden der Seitenabschnitte gegen das Bauteil gepresst. Es ist unmittelbar einsichtig, dass diese mehrteilige Halterung keine hohen Lastwerte erreicht. Die Federkraft kann nicht beliebig hoch gewählt werden, da die Halterung ja von Hand montierbar und wieder demontierbar sein soll. Daher ist die erreichbare Klemmkraft relativ klein. Die Halterung besteht aus mehreren Einzelbauteilen, die separat gefertigt und dann zusammenmontiert werden müssen. Sie ist kompliziert in der Handhabung; insbesondere ist sie nur relativ umständlich wieder lösbar, falls ein Nachspannen erforderlich ist oder die Halterung demontiert werden soll. Die Halterung ist nur für stangenartige Bauteile mit glatter Oberfläche vorgesehen. Bei Gewindebolzen ist sie nur schwer in der richtigen Position arretierbar, da ein Verschieben infolge des Aussengewindes nur sehr schwer möglich ist.

Aufgabe der vorliegenden Erfindung ist es, diesen Nachteilen des Stands der Technik abzuhelfen. Es soll ein Befestigungselement für Gewindebolzen geschaffen werden, das einfach im Aufbau, kostengünstig in der Herstellung und schnell und leicht in der Anwendung ist. Das Befestigungselement soll eine Schnellmontage auf Gewindebolzen ermöglichen. Es soll ausreichend hohe Lastwerte erbringen und einfach nachstellbar sein.

Die Lösung dieser Aufgaben besteht in einem Befestigungselement für Gewindebolzen, welches die im kennzeichnenden Abschnitt des Patentanspruchs 1 angeführten Merkmale aufweist. Demnach umfasst das Befestigungselement ein U-förmiges Winkelstück mit einem Basisteil und zwei senkrecht davon abragenden Schenkeln, die jeweils eine hakenmaulartige Aussparung aufweisen. Die Aussparungen münden an den Längsrändern der Schenkel, wobei die Mündungen einander entgegengerichtet sind. In den Aussparungen sind wenigstens bereichsweise Gewindegänge angeordnet. Dabei ergänzen sich die in den Aussparungen einander gegenüberliegenden Gewindegänge zu einem durchgängigen Gewinde.

Indem in den Aussparungen Gewindegänge vorgesehen sind, die sich zu einem durchgängigen Gewinde ergänzen, ist das Befestigungselement sehr einfach und schnell an beliebiger Stelle eines Gewindebolzens montierbar. Dazu wird das U-förmige Winkelstück einfach mit seinem offenen Seitenteil an den Gewindebolzen angesetzt und seitlich eingeschoben. Die Öffnungsweite des Winkelstücks entspricht dabei wenigstens dem Aussendurchmesser des Gewindebolzens. Durch ein Verschwenken um 90° gleitet der Gewindebolzen in die Aussparungen an den Schenkeln, die auf den Aussendurchmesser des Gewindebolzens abgestimmt sind. Durch das Verschwenken kommen die Gewindegänge in den Aussparungen in Eingriff mit dem Aussengewinde des Gewindebolzens. Nachdem der Abstand der Schenkel des Winkelstücks derart bemessen ist, dass sich die Gewindegänge in den Aussparungen zu einem durchgängigen Gewinde ergänzen, ist das Befestigungselement sehr einfach durch Drehen entlang des Gewindebolzens feinverstellbar, bis die Aussenseite eines der Schenkel in Anlage zu einem zu befestigenden Bauteil kommt. Die erzielbaren Lastwerte sind ausreichend hoch, da die Gewindegänge in den Aussparungen mit dem Aussengewinde des Gewindebolzens einen Formschluss bilden. Die Gewindegänge können beispielsweise Teil eines metrischen Gewindes, eines Zoll-Gewindes oder eines Steilgewindes sein. Das Gewinde kann auch, je nach Bedarf, rechts- oder linksgängig ausgebildet sein. Das Befestigen und Wiederlösen des Befestigungselements erfolgt einfach durch Drehen in die erforderliche Richtung. Das Drehen des Befestigungselements erfolgt beispielsweise sehr einfach mit einem Schraubendreher, einem Stift oder ähnlichem, der zwischen den Gewindebolzen und den U-Bogen des angesetzten Befestigungselements gesteckt wird. Das Befestigungselement ist einstückig ausgebildet und ist entsprechend einfach und kostengünstig herstellbar.

Für die erzielbaren Lastwerte ist es von Vorteil, wenn die Gewindegänge entlang des gesamten Innenumfangs der Aussparung vorgesehen sind, um den formschlüssig ineinandergreifenden Bereich der Gewindegänge und des Aussengewindes am Gewindebolzen zu vergrössern.

Indem wenigstens eine der beiden Aussparungen an den Schenkeln Gewindegänge aufweist, die hinterstellt sind, ist die Handhabung des Befestigungselements weiter vereinfacht. Durch die hinterstellten Gewindegänge weist die Aussparung einen Abschnitt auf, der einen geringfügig kleineren Öffnungsquerschnitt aufweist als der Aussendurchmesser des Gewindebolzens. Bei der Montage des Befestigungselements kommt es beim Verschwenken um 90° beim Einführen des Gewindebolzens zu einem Einschnappen, wenn der Gewindebolzen den geringfügig vorstehenden Abschnitt überwindet. Dadurch ist das Befestigungselement gegen ein unbeabsichtigtes Zurückschwenken und Abfallen von dem Gewindebolzen gesichert. Vorzugsweise sind die Gewindegänge in beiden Aussparungen hinterstellt. Dadurch tritt der Schnappeffekt bei beiden Schenkeln auf, und es ist zuverlässig verhindert, dass das Befestigungselement aus seiner Soll-Lage kippt.

Für den als Montagesicherung dienenden Schnappeffekt des Befestigungselements erweist sich ein Umgreifungswinkel der hinterstellten Gewindegänge von Vorteil, der grösser als 180° und kleiner als 210° ist. Bei der oberen Grenze des Umgreifungswinkels ist der Widerstand beim Hineingleiten des Gewindebolzens gerade so hoch, dass es zu keinen Beschädigungen des Aussengewindes kommt und die Manipulation ohne übermässige Kraftanstrengung von Hand durchführbar ist.

Die Gewindegänge in den Aussparungen weisen eine gemeinsame Gewindeachse auf, die mit Vorteil gegenüber einer Bauteilachse, die senkrecht zu den Aussenflächen der Schenkel verläuft, geneigt ist. Durch die Neigung der Gewindeachse ergibt sich bei der Anlage des Befestigungselements an einem Bauteil ein zustellendes Drehmoment.

Dadurch wird das Befestigungselement in Anzugsrichtung vorgespannt; die Versagenslast des Befestigungselements wird hierdurch erhöht. Bevorzugt beträgt der Neigungswinkel der Gewindeachse gegenüber der Bauteilachse etwa 0,5° bis etwa 3°.

Das erfindungsgemässe Befestigungselement kann ein Metallbügel sein, der zu einem U-förmigen Winkelstück gebogen, mit Aussparungen und mit Gewindegängen versehen ist. In einer besonders einfachen Ausführungsvariante ist das Befestigungselement ein Blechteil, das in den gewünschten Abmessungen ausgestanzt und gegebenenfalls gebogen ist. Die Gewindegänge in den Aussparungen einschliesslich einer allfälligen Hinterstellung sind dabei mit Vorteil durch Prägen hergestellt.

Für die Stabilität des Befestigungselements, insbesondere für den die Durchgängigkeit der Gewindegänge bestimmenden Abstand der Schenkel voneinander, erweist sich eine Materialwandstärke von etwa 2 mm bis etwa 10 mm als zweckmässig.

Im folgenden wird die Erfindung unter Bezugnahme auf in den Figuren dargestellte Ausführungsbeispiele näher erläutert. Es zeigen in zum Teil schematischer, nicht massstabsgetreuer Darstellung:
- Fig. 1: eine perspektivische Ansicht eines ersten Ausführungsbeispiels des Befestigungselements;
- Fig. 2 - 4: Darstellungen zur Erläuterung des Montagevorgangs des Befestigungselements aus Fig. 1;
- Fig. 5: eine Draufsicht des montierten Befestigungselements gemäss Fig. 1; und
- Fig. 6: einen Axialschnitt einer weiteren Variante des Befestigungselements.

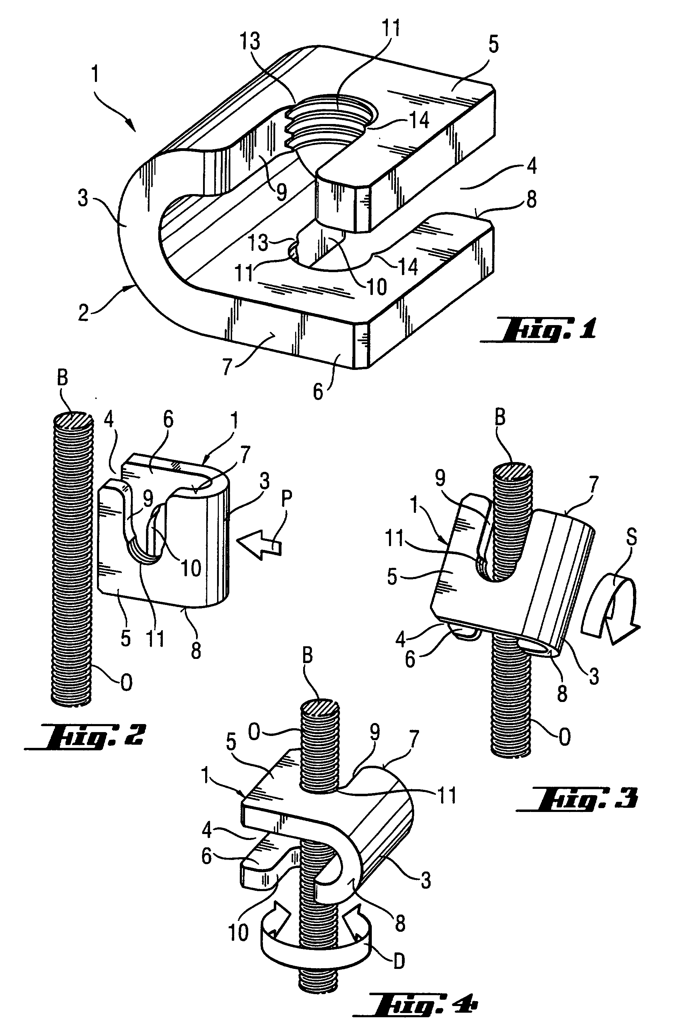

Ein erstes Ausführungsbeispiel des erfindungsgemässen Befestigungselements für Gewindebolzen ist in Fig. 1 gesamthaft mit dem Bezugszeichen 1 versehen. Es besteht aus einem U-förmigen Winkelstück 2, von dessen Basisteil 3 zwei Schenkel 5, 6 abragen, die parallel zueinander verlaufen. Die dem Basisteil 3 gegenüberliegende Seite des Winkelstücks 2 ist offen ausgebildet und weist einen Öffnungsschlitz 4 auf. Die Schenkel 5, 6 sind jeweils mit einer hakenmaulartigen Aussparung 9 bzw. 10 versehen, die an einander abgewandten Längsseiten 7 bzw. 8 münden. Die Mündungen der Aussparungen 9, 10 sind einander entgegengerichtet. Am teilkreisförmigen Grund jeder Aussparung 9, 10 sind Gewindegänge 11 vorgesehen. Der Abstand der Schenkel 5, 6 voneinander und der Verlauf der Gewindegänge 11 sind derart gewählt, dass sich die an den Schenkeln vorgesehenen, einander gegenüberliegenden Gewindegänge 11 zu einem durchgehenden Gewinde ergänzen.

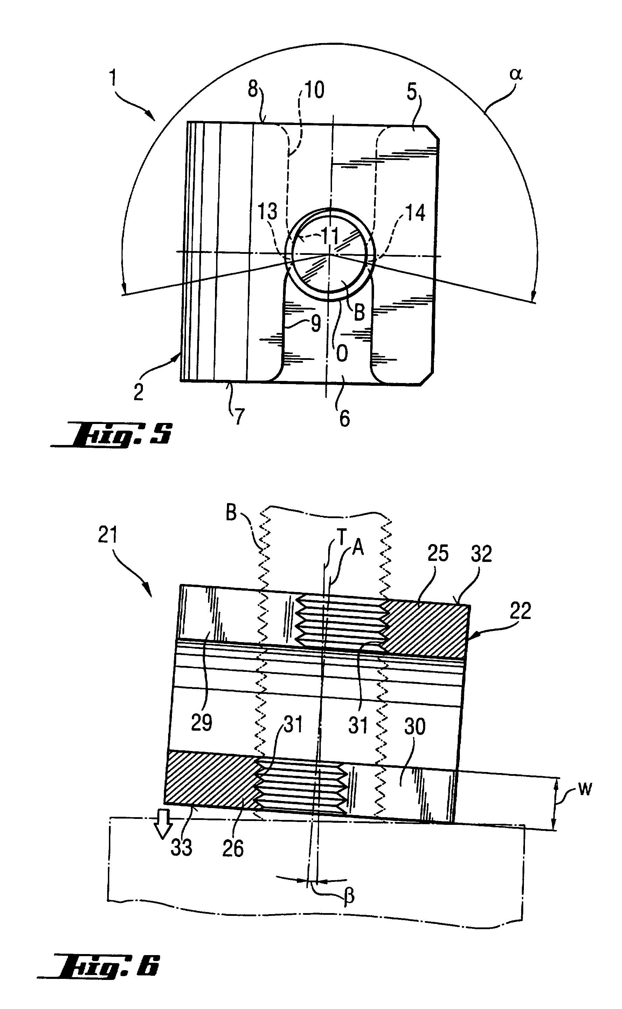

In den Fig. 2 bis 4 ist der Montagevorgang des erfindungsgemässen Befestigungselements 1 an einem Gewindebolzen B mit einem Aussengewinde O dargestellt. Zunächst wird das Befestigungselement 1 mit seinem Öffnungsschlitz 4 voran in Richtung des lateralen Pfeils P an den Gewindebolzen herangeführt (Fig. 2). Der Abstand der Schenkel des U-förmigen Winkelstücks ist grösser als der Aussendurchmesser des Gewindebolzens. Nachdem das Befestigungselement 1 seitlich auf den Gewindebolzen B aufgeschoben ist, wird es gemäss dem Pfeil S um 90° geschwenkt (Fig. 3). Dabei gleitet der Gewindebolzen B durch die Mündungen der Aussparungen in den Seitenwänden der Schenkel und die Gewindegänge in den Aussparungen kommen in Eingriff mit dem Aussengewinde O des Gewindebolzens B. Das um 90° geschwenkte Befestigungselement 1 kann dann durch Drehen gemäss dem Doppelpfeil D entlang dem Gewindebolzen B verstellt werden (Fig. 4).

Fig. 5 zeigt ein montiertes Befestigungselement 1 in Draufsicht. Der Gewindebolzen ist wiederum mit B bezeichnet. O bezeichnet das Aussengewinde des Gewindebolzens B. Wie aus der Darstellung ersichtlich ist, sind die Gewindegänge 11 der Aussparung 9 in einem Schenkel des L-förmigen Winkelstücks 2 hinterstellt. Dadurch weist die Aussparung an ihren beiden Längsseiten Vorsprünge 13, 14 auf, durch die der Öffnungsquerschnitt der Aussparung gegenüber dem Aussendurchmesser des Gewindebolzens B geringfügig verkleinert ist. Beim Einführen des Gewindebolzens B müssen diese Vorsprünge überwunden werden. Dies führt zu einem Schnappeffekt, der eine Sicherung für das vormontierte Befestigungselement bildet. Vorzugsweise sind beide Aussparungen mit hinterstellten Gewindegängen versehen. Durch die Hinterstellung weisen die Gewindegänge 11 einen Umgreifungswinkel a auf, der grösser ist als 180° und kleiner als 210°.

Fig. 6 zeigt eine Variante des Befestigungselements, das in der Darstellung gesamthaft mit dem Bezugszeichen 21 versehen ist. Das Befestigungselement 21 besteht wiederum aus einem U-förmigen Winkelstück 22 mit zwei parallel zueinander verlaufenden Schenkeln 25, 26. In den Schenkeln 25, 26 sind Aussparungen 29, 30 vorgesehen, die in den Längskanten der Schenkel 25, 26 münden und einander abgewandte Mündungen besitzen. Der Grund der Aussparungen 29, 30 ist mit Gewindegängen 31 versehen, die sich zu einem durchgängigen Gewinde ergänzen. Eine senkrecht zu den Aussenflächen 32, 33 der Schenkel verlaufende Bauteilachse trägt das Bezugszeichen A. Die Gewindegänge 31 sind um eine gemeinsame Gewindeachse T als Symmetrieachse angeordnet. Zum Unterschied von dem anhand von Fig. 1 erläuterten Ausführungsbeispiel der Erfindung sind die Gewindegänge derart angeordnet, dass ihre Gewindeachse T gegenüber der Bauteilachse A geneigt verläuft. Vorzugsweise beträgt der mit β bezeichnete Neigungswinkel zwischen der Bauteilachse A und der Gewindeachse T etwa 0,5° bis etwa 3°.

Das Befestigungselement kann beispielsweise ein Metallbügel sein, der zu einem U-förmigen Winkelstück gebogen, mit Aussparungen und mit Gewindegängen versehen ist. In einer alternativen Ausführungsvariante ist das Befestigungselement ein Blechteil, das in den gewünschten Abmessungen ausgestanzt und gegebenenfalls gebogen ist. Die Gewindegänge in den Aussparungen einschliesslich einer allfälligen Hinterstellung sind dabei mit Vorteil durch Prägen hergestellt. Das U-förmige Winkelteil 22 weist vorzugsweise eine Wandstärke w auf, die etwa 2 mm bis etwa 10 mm beträgt.

## Patentansprüche

1. Befestigungselement für Gewindebolzen (B) umfassend ein U-förmiges Winkelstück (2; 22) mit einem Basisteil (3) und zwei senkrecht davon abragenden Schenkeln (5, 6; 25, 26), die jeweils eine hakenmaulartige Aussparung (9, 10; 29, 30) aufweisen, die an den Längsrändern (7, 8) münden, wobei die Mündungen einander entgegengerichtet sind, **dadurch gekennzeichnet, dass** die Aussparungen (9, 10; 29, 30) wenigstens bereichsweise mit Gewindegängen (11; 31) versehen sind, wobei die in den Aussparungen (9, 10; 29, 30) vorgesehenen, einander gegenüberliegenden Gewindegänge (11; 31) sich zu einem durchgängigen Gewinde ergänzen.

2. Befestigungselement nach Anspruch 1, **dadurch gekennzeichnet, dass** die Gewindegänge (11; 31) entlang des gesamten Innenumfangs der Aussparung (9, 10; 29, 30) vorgesehen sind.

3. Befestigungselement nach Anspruch 2, **dadurch gekennzeichnet, dass** die Gewindegänge (11) wenigstens einer Aussparung (9) hinterstellt sind.

4. Befestigungselement nach Anspruch 3, **dadurch gekennzeichnet, dass** der Umgreifungswinkel (α) der hinterstellten Gewindegänge (11) grösser als 180° und kleiner als 210° ist.

5. Befestigungselement nach Anspruch 3 oder 4, **dadurch gekennzeichnet, dass** die Gewindegänge (11) beider Aussparungen (9, 10) hinterstellt sind.

6. Befestigungselement nach einem der vorangehenden Ansprüche, **dadurch gekennzeichnet, dass** die Gewindegänge (31) eine gemeinsame Gewindeachse (T) aufweisen, die gegenüber einer Bauteilachse (A), die senkrecht zu den Aussenflächen (32, 33) der Schenkel (25, 26) verläuft, geneigt ist.

7. Befestigungselement nach Anspruch 6, **dadurch gekennzeichnet, dass** der Neigungswinkel (β) der Gewindeachse (T) gegenüber der Bauteilachse (A) etwa 0,5° bis etwa 3° beträgt.

8. Befestigungselement nach einem der vorangehenden Ansprüche, **dadurch gekennzeichnet, dass** das Bauteil ein Blechteil ist, wobei die Gewindegänge in den Aussparungen vorzugsweise geprägt sind.

9. Befestigungselement nach einem der vorangehenden Ansprüche, **dadurch gekennzeichnet, dass** das Winkelstück (22) eine Wandstärke (w) von etwa 2 mm bis etwa 10 mm aufweist.

## Claims

1. Fastener for threaded bolts (B), comprising a U-shaped angle piece (2; 22) having a base element (3) and two side-pieces projecting vertically therefrom (5, 6; 25, 26) which respectively incorporate a recess (9, 10; 29, 30) in the form of a hook mouth opening out on the longitudinal edges (7, 8), the openings being arranged opposite one another, **characterised in that** the recesses (9, 10; 29, 30) are provided at least in some areas with thread turns (11; 31), with the mutually opposing thread turns (11, 31) that are provided in the recesses (9, 10; 29, 30) complementing one another to form one continuous thread.

2. Fastener according to claim 1, **characterised in that** the thread turns (11; 31) are provided along the entire inner circumference of the recess (9, 10; 29, 30).

3. Fastener according to claim 2, **characterised in that** the thread turns (11) of at least one recess (9) are set back.

4. Fastener according to claim 3, **characterised in that** the encompassing angle (α) of the thread turns (11) that are set back is bigger than 180° and smaller than 210°.

5. Fastener according to claim 3 or 4, **characterised in that** the thread turns (11) of both recesses (9, 10) are set back.

6. Fastener according to any one of the preceding claims, **characterised in that** the thread turns (31) incorporate a common thread axis (T) which is inclined with respect to a component part's axis (A) which runs perpendicular to the external surfaces (32, 33) of the side-pieces (25, 26).

7. Fastener according to claim 6, **characterised in that** the rake (β) of the thread axis (T) with respect to the component part's axis (A) is approximately 0.5° to approximately 3°.

8. Fastener according to any one of the preceding claims, **characterised in that** the component part is a sheet-metal plate, with the thread turns being preferably stamped into the recesses.

9. Fastener according to any one of the preceding claims, **characterised in that** the angle piece (22) has a material thickness (w) of approximately 2 mm to approximately 10 mm.

## Revendications

1. Élément de fixation pour goujons filetés (B), comprenant une pièce coudée en U (2 ; 22) avec une partie de base (3) et deux branches (5, 6 ; 25, 26) qui en partent perpendiculairement et qui sont pourvues chacune d'une échancrure à bec de crochet (9, 10 ; 29, 30) qui débouche au niveau d'un bord longitudinal respectif (7, 8), les orifices débouchants étant orientés à l'opposé l'un de l'autre, **caractérisé en ce que** les échancrures (9, 10 ; 29, 30) sont pourvues au moins par endroits de pas de vis (11 ; 31), les pas de vis (11 ; 31) prévus dans les échancrures (9, 10 ; 29, 30) et orientés à l'opposé l'un de l'autre se complétant pour former un vis continu.

2. Élément de fixation selon la revendication 1, **caractérisé en ce que** les pas de vis (11 ; 31) sont prévus le long de toute la périphérie intérieure de l'échancrure (9, 10 ; 29, 30).

3. Élément de fixation selon la revendication 2, **caractérisé en ce que** les pas de vis (11) d'au moins une échancrure (9) sont en contre-dépouille.

4. Élément de fixation selon la revendication 3, **caractérisé en ce que** l'angle d'enveloppement (α) des pas de vis en contre-dépouille (11) est supérieur à 180° et inférieur à 210°.

5. Élément de fixation selon la revendication 3 ou 4, **caractérisé en ce que** les pas de vis (11) des deux échancrures (9, 10) sont en contre-dépouille.

6. Élément de fixation selon une des revendications précédentes, **caractérisé en ce que** les pas de vis (31) possèdent un axe de vis commun (T) qui est incliné par rapport à un axe d'élément structurel (A), lequel s'étend perpendiculairement aux surfaces extérieures (32, 33) des branches (25, 26).

7. Élément de fixation selon la revendication 6, **caractérisé en ce que** l'angle d'inclinaison (β) de l'axe de vis (T) par rapport à l'axe d'élément structurel (A) est d'environ 0,5° à environ 3°.

8. Élément de fixation selon une des revendications précédentes, **caractérisé en ce que** l'élément structurel est un élément en tôle, les pas de vis étant de préférence matricés dans les échancrures.

9. Élément de fixation selon une des revendications précédentes, **caractérisé en ce que** la pièce coudée (22) possède une épaisseur de paroi (w) d'environ 2 mm à environ 10 mm.
